# EUROPEAN PATENT APPLICATION

(11) **EP 1 978 174 A2**
(43) Date of publication of application: **08.10.2008**
(21) Application number: 08153944.7
(22) Date of filing: 02.04.2008
(51) Int. Cl.: E04B 5/26

(54) **Method for obtaining a modular covering element, particularly for providing ventilated floors or floor slabs of buildings**

(30) Priority: 04.04.2007 IT TV20070059
(71) Applicant: T.P.S. S.R.L., 31040 Gorgo al Monticano (TV) (IT)
(72) Inventor: ALBERTINI, Antimo Riccardo, 31046, ODERZO TV (IT)
(74) Representative: Modiano, Micaela Nadia

(57) **Abstract**

A method for obtaining a modular covering element (1), particularly for providing ventilated floors or floor slabs of buildings, comprising a body (2) made of plastic material which has an upper surface (3) and four or more lateral legs (4) and means (6) for coupling to other similar covering elements. The method provides for obtaining in a mold one or more regions and/or elements in relief which are flat at the upper surface of the plastic body; this is followed by positioning in the mold at least one net or netting (8) at the part that forms the upper surface (3). Then the mold is closed, with consequent adaptation of the net or netting (8) to the shape of the upper surface (3) of the body (2), and thermoplastic material is injected; this is followed by cooling and opening the mold. Finally, the method provides for extracting a covering element whose upper surface, once cooled, is arc-like at least in the initially flat region and/or element in relief

## Description

The present invention relates to a method for obtaining a modular covering element, particularly for providing ventilated floors or floor slabs of civil and industrial buildings.

Currently, in the building sector it is known to erect buildings with suitable constructive solutions or systems which comply with the need to convey outward damp air and any radioactive gases, such as for example radon, which originate from the ground.

To provide ventilation of rooms located in contact with the ground, thus allowing an effective outflow of the damp air and of these gases, it is known to provide at ground level concrete walls which are cast in place or concrete blocks or also perforated brickwork, interposing between them various rows of hollow flat blocks or reinforced concrete slabs and then depositing thereon a concrete casting, with the addition of traditional waterproofing, condensation-prevention and thermal insulation systems, so as to obtain a plane which constitutes the floor.

This allows to provide a structure which is permeated by internal cavities which are interconnected and linked to the outside environment through channels of adapted size, by means of which the damp air and the gases that arrive from the ground are collected and conveyed toward proper ventilation vents which are connected to the outside.

The main drawback of this known type of solution is constituted by the fact that the resulting ventilation structures entail the presence of various separate components, whose installation requires executing many steps of work and excessively long times to achieve them, with consequent high costs, both for acquiring the required construction materials and for the personnel used to apply and install said materials.

As a partial solution to the drawback noted above, modular elements are also known which can be used particularly to provide ventilated concrete slabs, for example at the floor of preset buildings that is arranged in contact with the ground.

Each one of these modular elements is constituted by at least one prefabricated part, which is dome-shaped and preferably made of plastic material with variable heights and forms inside it a cavity which, by virtue of appropriately provided arc-like lateral openings, allows to define ventilation channels in the condition in which multiple parts are mutually side-by-side.

These ventilation channels can be connected to the outside through ventilation shafts or similar ducts.

Each modular element has legs, the bases of which can be positioned on a supporting surface of the interior space, and can be coupled to additional prefabricated parts so as to form a structure which covers said supporting surface, forming inside it a plurality of ventilation channels.

An electrically welded net is generally laid above the resulting structure and the entire assembly is then covered with concrete or other derived products based on concrete or not; the concrete or other product covers the upper surface of the various modular elements and further enters the interspace comprised between the legs of four contiguous elements, forming vertical pillars once it has hardened.

The main drawback that can be observed in these known types of modular elements is that, particularly at their upper surface, they are susceptible of possible deformations or crushings, both during the casting of the concrete or other product and if workers walk on the modular elements that have already been installed.

In order to try to limit these deformations or crushings, the thickness of the plastic material that constitutes these known types of modular element is kept high, and further suitable reinforcement ribs of considerable height and thickness are often provided thereon, with the consequent increase in their cost that this entails.

The high thickness of these known types of modular elements further entails great weight and space occupations for them, and this has a negative effect on their transport and storage costs.

A further drawback of these known types of modular elements is that in order to avoid weakening excessively their upper surface, their plan extension is limited, and this accordingly limits the dimensions of the ventilation channels that can be obtained with these known types of modular elements.

Further, the smaller the plan extension of said modular elements, the larger the number of said elements that is needed to cover a given surface; for an equal covered surface, a smaller plan extension of the individual modular element entails a larger number of legs used, and therefore a greater use of plastic material, and further entails the formation, after the casting of concrete or other material, of a larger number of pillars of concrete or other material, with the consequent greater use thereof that this entails.

Moreover, the larger the number of modular elements to be installed for an equal surface to be covered, the longer the time requirements and accordingly the costs of installation.

European patent EP-1199420B1 is also known which illustrates a disposable modular element for providing ventilated and/or insulated floor slabs, which also can be coupled to similar elements, having the same dimensions and shape, to form a series of domes whose upper surface is flat.

Further, the text states that each modular element must have a reduced thickness.

However, these known types of modular element, too, have drawbacks; in fact, their reduced thickness, combined with the flatness of the upper surface of the dome, forms areas or regions of reduced strength which can be subject to breakage due to loads which bear thereon, for example, due to the walking or standing thereat of a user during the placement for installation of the modular elements.

Further, said modular elements have a plurality of supports which reduce the dimensions of the ventilation channels, consequently reducing the overall ventilation and preventing the passage of large utilities.

Moreover, in order to obtain the domes and the intermediate supports it is necessary to use a complex mold, with the consequent cost increase that this entails.

The aim of the present invention is therefore to solve the described technical problems, eliminating the drawbacks of the cited background art, by providing a method which allows to provide a modular ventilation structure which has high characteristics of resistance to the weight of the overlying casting of concrete or other material even during the casting thereof, and also to the weight of a user when walking thereon.

Within this aim, an object of the invention is to allow to obtain large ventilation channels, so as to allow optimum ventilation and the passage of even large utilities.

Another object of the invention is to allow to obtain, for an equal surface to be covered, a saving in the amount of concrete or other material that is used with respect to the amount needed when using known types of modular elements.

Another object of the invention is to be able to provide a modular covering element which allows to reduce the times and costs for providing a ventilated floor of a building.

Another object is to provide a method which allows to obtain a modular covering element, particularly for providing ventilated floors or floor slabs of buildings, which has reduced storage and transport costs.

Another object of the invention is to be able to obtain a modular covering element particularly for providing ventilated floors or building floor slabs with a reduced consumption of plastic material, so as to achieve a reduction in production costs.

Another object of the invention is to be able to use also a mold which can be used to provide a modular element of a known type.

Another object is to provide an invention which is structurally simple and has low manufacturing costs.

This aim and these and other objects, which will become better apparent hereinafter, are achieved by a method for obtaining a modular covering element, particularly for providing ventilated floors or floor slabs of buildings, which comprises a body made of plastic material which has an upper surface and four or more legs and means for coupling to other similar covering elements, characterized in that it comprises the steps of:
a) obtaining in a mold one or more regions and/or elements in relief which are flat at said upper surface;
b) positioning in said mold at least one net or netting at the part that forms said upper surface;
c) closing said mold, with consequent adaptation of said at least one net or netting to the shape of said upper surface;
d) injecting thermoplastic material;
e) cooling and opening said mold;
f) extracting a covering element which is characterized in that once it has cooled said upper surface is arc-like.

Further characteristics and advantages of the present invention will become better apparent from the following detailed description of a particular but not exclusive embodiment thereof, illustrated by way of nonlimiting example in the accompanying drawings, wherein:

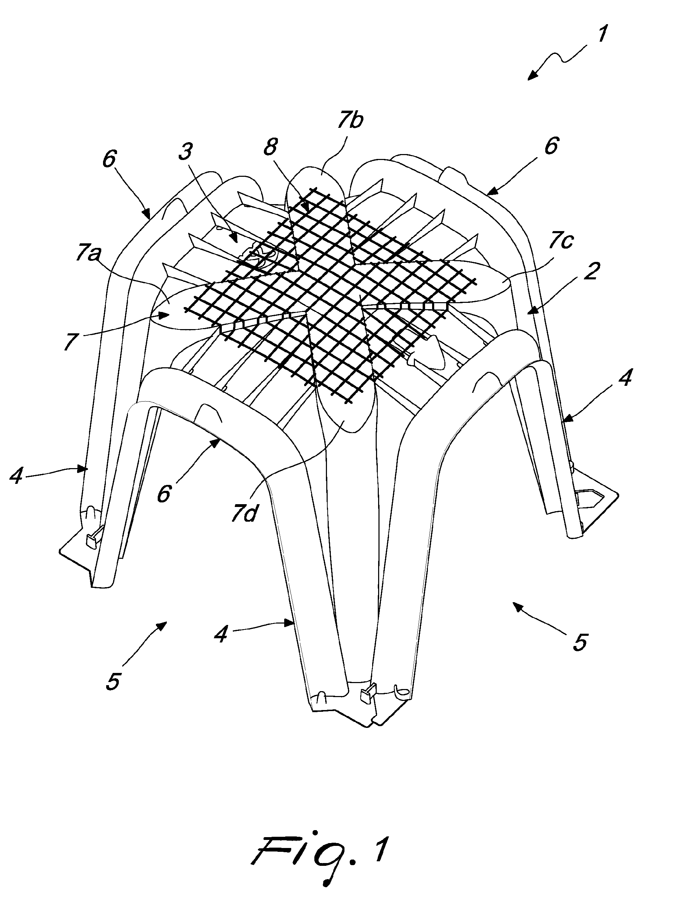

Figure 1 is a perspective view of a covering element obtained with the method according to the invention, in which the reinforcement net has been shown in solid lines although it might not be entirely visible because it is partially embedded;

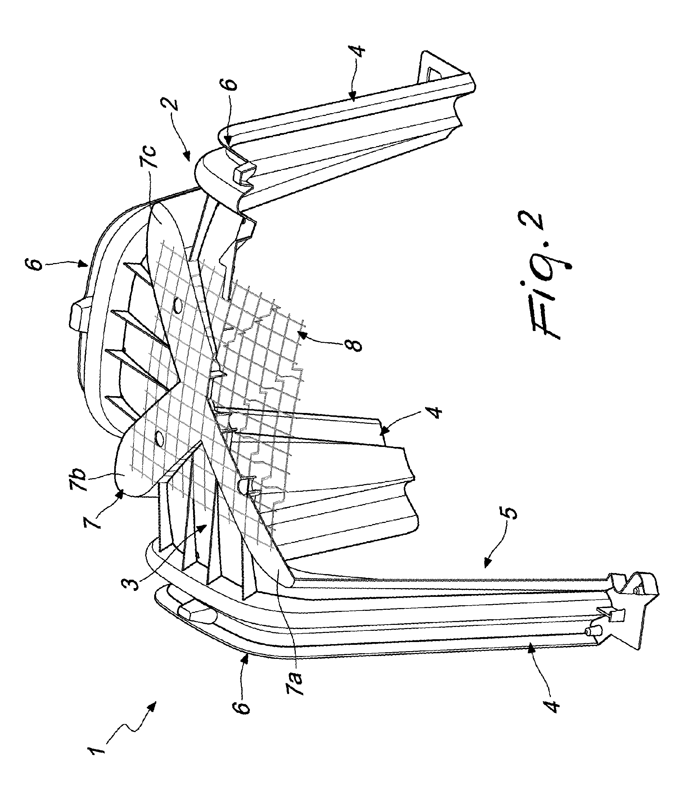

Figure 2 is a partially sectional perspective view of the covering element of Figure 1;

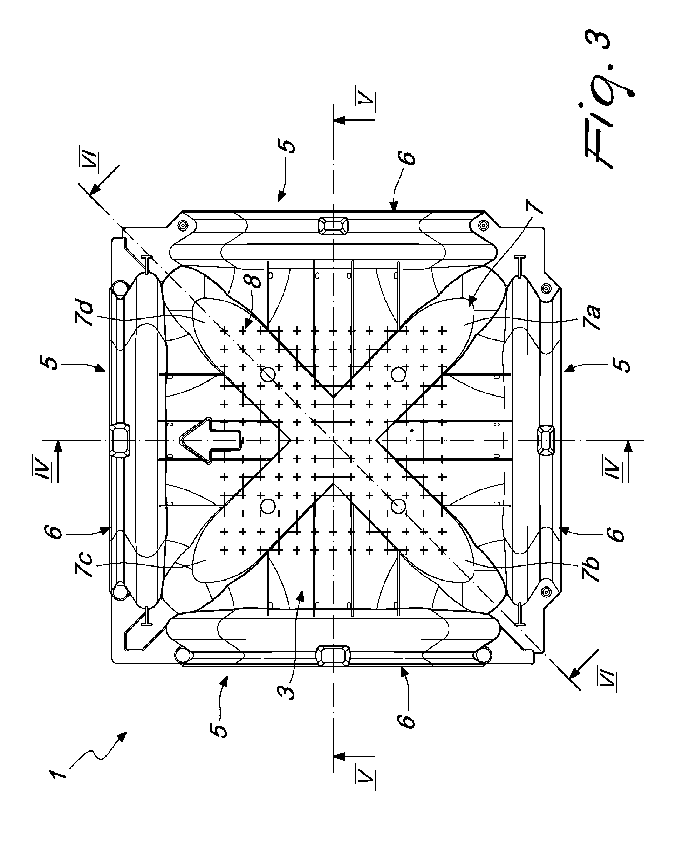

Figure 3 is a plan view of the covering element according to the preceding figures;

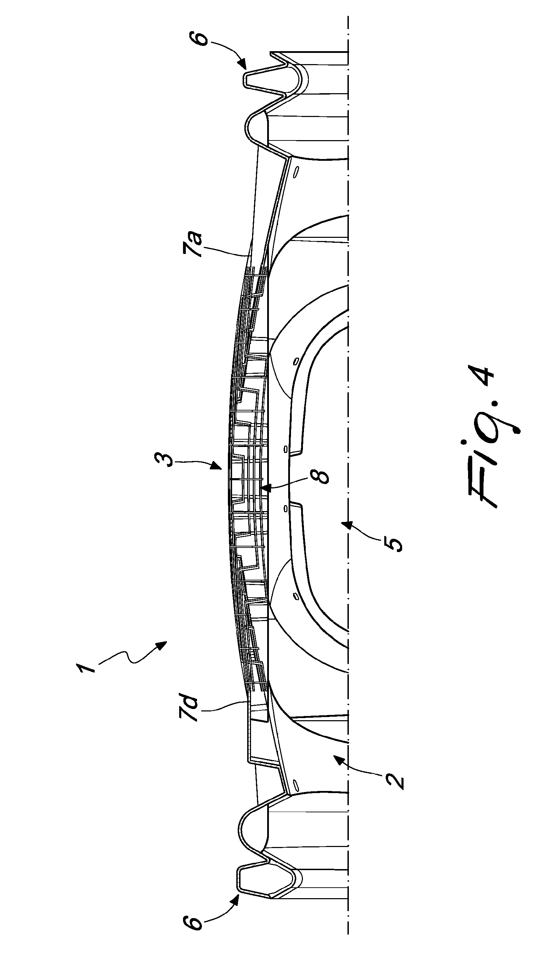

Figure 4 is a sectional view, taken along the line IV-IV of Figure 3, of a detail of the covering element according to the preceding figures;

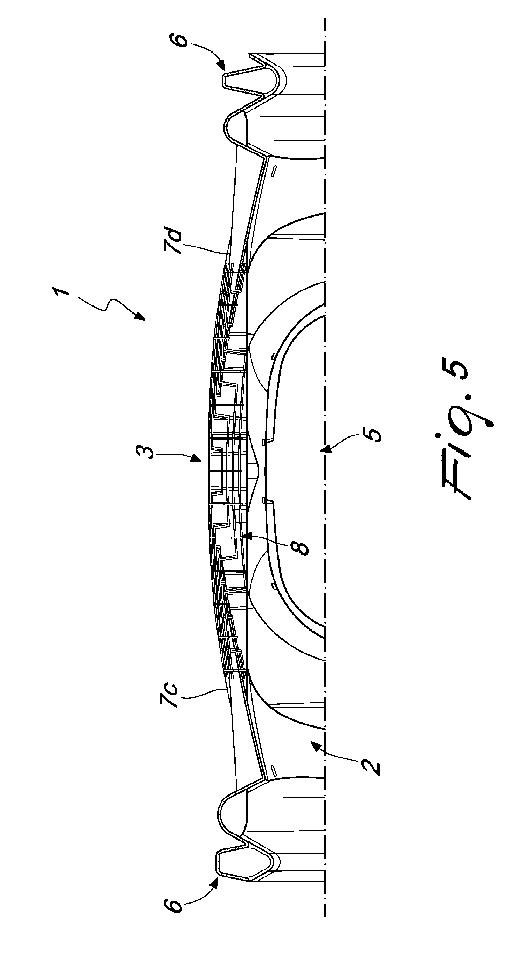

Figure 5 is a sectional view, taken along the line V-V of Figure 3, of a detail of the covering element according to the preceding figures;

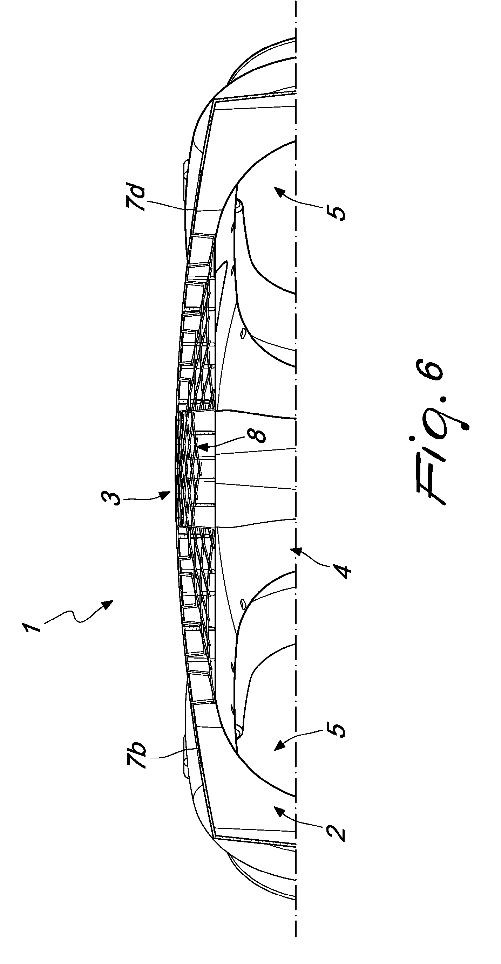

Figure 6 is a sectional view, taken along the line VI-VI of Figure 3, of a detail of the covering element according to the preceding figures.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the accompanying figures, the method according to the invention allows to obtain a modular covering element 1 which can be particularly used to provide, at floors or floor slabs of buildings, not shown in the accompanying figures, suitable modular structures, also not shown, provided with channels for the outflow of damp air and of any noxious gases that originate from the ground and/or for laying various ducts or cables and/or for reducing the weight of said floors or floor slabs.

Such covering element 1 is constituted by a body 2 which is approximately dome-shaped, so as to form an upper surface 3, which has a polygonal plan shape, preferably a square one, from which four or more legs 4 protrude downward; in the embodiment shown in the accompanying figures, the upper surface 3 has a substantially square plan shape and has four lateral legs 4 which protrude downward from its corners; between each pair of said legs there is a lateral opening 5 which is approximately arc-like.

The body 2 further has means for coupling to other similar covering elements, which are constituted preferably by wings 6 formed perimetrically with respect to the lateral openings 5 and have, in a transverse cross-section, a profile which is for example approximately sinusoidal and facilitates and strengthens, through the mutual overlap of the wings 6, the mutual coupling of contiguous modular covering elements 1.

The method according to the invention provides for the obtainment in a mold, not shown in the accompanying figures, of one or more regions or elements in relief, which are flat at the upper surface 3 of the body 2.

In the embodiment shown in the accompanying figures, the shape of the mold is for example such as to obtain, at the upper surface 3 of the body 2, a stiffening support 7 which, in plan view, is substantially cross-shaped, with four arms 7a, 7b, 7c, 7d which are arranged along the diagonals at the four corners of the body 2.

The shape of the mold is such as to obtain a flat upper surface for the stiffening support 7.

The method according to the invention then provides for the placement within said mold, at the wall thereof that is suitable to form the upper surface 3 of the covering element 1, of at least one net or netting 8.

This is followed by the closure of said mold, which causes the adaptation of the net or netting 8 to the shape of the upper surface 3 and therefore, in the embodiment shown in the accompanying figures, to the shape of the stiffening support 7.

As an alternative, the net or netting 8 can be shaped complementarily with respect to the shape of the upper surface 3 of the body 2 prior to its insertion in the mold.

Advantageously, but not necessarily, the net or netting 8 is arranged at the central region of the upper surface 3 of the body 2.

The net or netting 8 is thus folded so as to follow the shape of the upper surface 3 and in particular, in the case shown in the accompanying figures, of the flat region thereof, obtained with the stiffening support 7.

Advantageously, but not necessarily, the net or netting 8 is approximately square in plan view and has preferably square meshes.

Advantageously, but not necessarily, the net or netting 8 is made of metal.

The method according to the invention therefore provides for the injection in the mold of thermoplastic material, an initial cooling thereof, followed by the opening of said mold and by the extraction of the covering element 1 in which the net or netting 8 is at least partially embedded in the upper surface 3, and then, in the embodiment shown in the accompanying figures, in the stiffening support 7 of the covering element 1.

It has been found that because of the presence of the net or netting 8, during cooling, the molecules of the thermoplastic material, subjected to intense stress due to their injection into the mold at high temperature and pressure, are unable to relax and shrink naturally during the cooling step.

In the thermoplastic material that constitutes the body 2, internal structural tensions are thus created, causing the curving of the upper surface 3 of the body 2 and also, in the embodiment shown in the accompanying figures, of the region thereof that corresponds to the upper surface of the stiffening element 7, which would instead be flat for an injection of thermoplastic material in the absence of the net or netting 8; therefore, once cooling has ended, one obtains an arc-like profile also of the region initially injected as flat.

The tensions within the thermoplastic material and the final curved shape of the upper surface 3 and also, in the embodiment shown in the accompanying figures, of the upper surface of the stiffening element 7, increase the solidity of the body 2.

The arc-like profile of the upper surface 3 further facilitates the discharge toward the legs 4 of the compression stresses applied thereto.

It has thus been found that the invention has achieved the intended aim and objects, a method having been devised which allows to obtain a modular covering element, particularly for providing ventilated floors or floor slabs of buildings, which thanks to the presence of the net or netting which is embedded or partially embedded in its upper surface, has an arc-like final upper surface although a flat region was initially injected for it, so as to have a high resistance to compression without requiring an increase in the thickness of the plastic material.

The invention further allows to provide a modular covering element which, for an equal resistance to compression, particularly of its upper surface, and for an equal thickness of the plastic material and of the number of legs, has a larger surface than the background art.

Further, the modular covering element provided with the method according to the invention allows to reduce, with respect to the background art, the number of covering elements required to cover a given surface; this reduces the times and costs for installation and also reduces the number of pillars of concrete or other material that form after the casting of said material, thus reducing its consumption.

Further, the high resistance of the upper surface of the body that constitutes the covering element allows to use a limited thickness of the plastic material that constitutes said upper surface.

Moreover, the method according to the invention can be provided also by an ordinary mold used to provide a known type of covering element.

The invention is of course susceptible of numerous modifications and variations, all of which are within the scope of the appended claims.

The materials used, as well as the dimensions that constitute the individual components of the invention, may of course be more pertinent according to the specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. TV2007A000059 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining a modular covering element, particularly for providing ventilated floors or floor slabs of buildings, comprising a body made of plastic material which has an upper surface and four or more legs and means for coupling to other similar covering elements, **characterized in that** it comprises the steps of:
a) obtaining in a mold one or more regions and/or elements in relief which are flat at said upper surface;
b) positioning in said mold at least one net or netting at the part that forms said upper surface;
c) closing said mold, with consequent adaptation of said at least one net or netting to the shape of said upper surface;
d) injecting thermoplastic material;
e) cooling and opening said mold;
f) extracting a covering element which is **characterized in that** once it has cooled said upper surface is arc-like.

2. A modular covering element particularly for providing ventilated floors or floor slabs of buildings, comprising a body made of plastic material and provided with an upper surface, four or more legs, and means for coupling to other similar covering elements, **characterized in that** at least one complementarily shaped net or netting is embedded in said upper surface and is suitable to give said upper surface an arc-like shape.

3. The method according to claim 1, **characterized in that** one or more regions or elements in relief which have a flat shape are formed within said mold at said upper surface of said body.

4. The method and the covering element according to one or more of the preceding claims, **characterized in that** at least one net or netting is arranged in said mold at the part thereof that is suitable to form said upper surface.

5. The method and the covering element according to claims 1, 2 and 4, **characterized in that** the closure of said mold causes the adaptation of said net or netting to the shape of the part of said upper surface that has a flat configuration.

6. The method and the covering element according to claims 1, 2 and 4, wherein a stiffening support is formed at said upper surface of said body and has, in plan view, a substantially cross-like configuration, with four arms arranged along the diagonals at the four corners of said body, **characterized in that** the closure of said mold causes the adaptation of said net or netting to the shape of said stiffening support.

7. The method and the covering element according to one or more of the preceding claims, **characterized in that** said net or netting is arranged at the central region of said upper surface of said body.

8. The method and the covering element according to one or more of the preceding claims, **characterized in that** said net or netting has a shape which forms approximately preferably square meshes.

9. The method and the covering element according to one or more of the preceding claims, **characterized in that** after the injection of thermoplastic material in said mold, an initial cooling thereof and the opening of said mold are followed by the extraction of said covering element, in which said net or netting is at least partially embedded in said stiffening support provided on said upper surface.

10. The method and the covering element according to one or more of the preceding claims, **characterized in that** during cooling, internal structural tensions are produced within said body causing a curvature at least of one or more initially flat regions and/or elements in relief of said upper surface of said body which are affected by said at least one net or netting, so as to obtain an arc-like profile.

11. A method for obtaining a modular covering element, particularly for providing ventilated floors or floor slabs of buildings, comprising a body made of plastic material which has an upper surface and four or more legs and means for coupling to other similar covering elements, **characterized in that** it comprises the steps of:
a) obtaining in a mold one or more flat regions and/or elements in relief at said upper surface;
b) arranging within said mold at least one net or netting previously shaped complementarily with respect to the shape of said upper surface, and closing said mold;
c) injecting thermoplastic material;
d) cooling and opening said mold;
e) extracting a covering element which is **characterized in that** once it has cooled said upper surface is arc-like.
